**Europäisches Patentamt**

**European Patent Office**

**Office européen des brevets**

(11) Veröffentlichungsnummer : **0 330 920 B1**

(12) **EUROPÄISCHE PATENTSCHRIFT**

(45) Veröffentlichungstag der Patentschrift :
**17.06.92 Patentblatt 92/25**

(21) Anmeldenummer : **89102660.1**

(22) Anmeldetag : **16.02.89**

(51) Int. Cl.⁵ : **A01C 17/00**

(54) **Schleuderdüngerstreuer.**

(30) Priorität : **14.06.88 DE 3820188**
**29.02.88 DE 3806439**

(43) Veröffentlichungstag der Anmeldung :
**06.09.89 Patentblatt 89/36**

(45) Bekanntmachung des Hinweises auf die
Patenterteilung :
**17.06.92 Patentblatt 92/25**

(84) Benannte Vertragsstaaten :
**DE FR GB**

(56) Entgegenhaltungen :
**EP-A- 0 240 734**
**DE-U- 8 705 447**
**FR-A- 2 450 551**
**GB-A- 2 014 023**

(73) Patentinhaber : **Amazonen-Werke H. Dreyer**
**GmbH & Co. KG**
**Am Amazonenwerk 9-13**
**W-4507 Hasbergen-Gaste (DE)**

(72) Erfinder : **Dreyer, Heinz, Dipl.-Ing. Dr.**
**Am Amazonenwerk 9-13**
**W-4507 Hasbergen (DE)**

Jouve, 18, rue Saint-Denis, 75001 PARIS

## Beschreibung

Die Erfindung betrifft ein Verfahren zum Einsatz von Schleuderdüngerstreuern.

In der als Stand der Technik nach Artikel 54 (3) geltenden europäischen Patentschrift 02 81 885 ist ein Verfahren zum Einsatz von Schleuderdüngerstreuern beschrieben. Bei diesem Verfahren wird ein Schleuderdüngerstreuer mit einem Vorratsbehälter und zumindest zwei rotierend angetriebenen Schleuderscheiben, auf denen jeweils zumindest zwei Wurfschaufeln, vorzugsweise unterschiedlicher wirksamen Längen, angeordnet sind, eingesetzt. Für die Normaldüngung Werden die Endableitflächen der Wurfschaufeln mit kleineren Winkeln zur Horizontalen angestellt und zur Spätdüngung Werden die Endableitflächen der Wurfschaufeln mit größeren Winkeln zur Horizontalen angestellt, wobei für verschiedene Arbeitsbreiten jeweils verschieden lange Wurfschaufeln zum Einsatz kommen, in dem die Wurfschaufeln unterschiedlicher Länge (kürzer oder länger) gegeneinander ausgetauscht werden. Die Wurfschaufeln sind in Scheibenebene winkelverschwenkbar auf den Schleuderscheiben angeordnet, so daß sie mit unterschiedlichen Winkeln zur Radialen einstellbar sind. Zur Einstellung der winkelverschwenkbaren Wurfschaufeln sind auf den Schleuderscheiben Skalen angeordnet, so daß anhand dieser Skalen, denen Symbole zugeordnet sind, die Schaufeln einstellbar sind. Wie bereits vorerwähnt sind an den Enden der Wurfschaufeln in aufrechte. Ebene verschwenkbare Endableitflächen angeordnet, die in zwei verschiedene Positionen angebracht werden können. Wenn die Endableitflächen sich in der unteren Position befinden, werden die Düngerpartikel in einem kleinen Winkel für die Normaldüngung abgeschleudert. Zur Durchführung der Spätdüngung werden diese Endableitflächen nach oben geschwenkt, so daß die Düngerpartikel mit einem größeren Winkel zur Horizontalen abgeschleudert werden.

Der Erfindung liegt die Aufgabe zugrunde, mit wenigen verschiedenen Wurfschaufeln oder verschiedenen Schleuderscheiben mit verschiedenen Wurfschaufeln vor allem bei der Spätdüngung und für einen größeren Arbeitsbreitenbereich sowie für viele Düngersorten die Streuarbeit zu optimieren.

Hierzu schlägt die Erfindung vor, daß die Arbeitsbreitendifferenz zwischen zwei verschiedenen Arbeitsbreitenbereichen für den Wechsel von einer Schaufellänge auf die andere Wurfschaufellänge zumindestens 6 m beträgt, so daß erst bei Überschreiten dieser Arbeitsbreitendifferenz die Schleuderscheiben mit den stufenlos winkelverschwenkbaren Wurfschaufeln einer Länge gegen eine andere Länge ausgetauscht oder die in Scheibenebene winkelverschwenkbaren Wurfschaufeln einer Länge gegen eine andere Länge ausgetauscht werden.

Infolge dieser Maßnahmen ist es nur noch erforderlich, bei einem Arbeitsbreitenwechsel, der mehr als 6 m beträgt, die Wurfschaufellänge zu ändern. Durch die stufenlose Winkeleinstellbarkeit der Wurfschaufeln in Scheibenebene läßt sich das Streubild optimieren, und zwar für sämtliche Windverhältnisse oder Düngersorten, so daß immer ein gutes Streubild und eine ausreichend gleichmäßige Düngerverteilung bei allen vorkommenden Einsatzbedingungen erzielt wird. Bisher werden sehr viele Schleuderscheiben mit unterschiedlich angestellten oder unterschiedlich ausgebildeten Wurfschaufeln, benötigt, um jeweils optimale Voraussetzungen für eine gleichmäßige Düngerverteilung für verschiedene Düngersorten und Arbeitsbreiten bei Normal- und Spätdüngung zu erreichen. Jetzt sind die Scheiben erfindungsgemäß mit den Schaufeln so eingerichtet, daß sie auf den Schleuderscheiben winkelverschwenkbar sind, um so immer die Wurfschaufelstellung an die Düngersorten und Arbeitsbreiten innerhalb des für die Schaufeln vorgesehenen Arbeitsbereiches anpassen zu können. Diese Schaufeln sind jeweils mittels Markierungen genau einstellbar. Die jeweilige Einstellung ist dann in Streutabellen angegeben, so daß der Landwirt sehr einfach die Einstellung vornehmen kann. Es sind also nicht nur entscheidend weniger Schleuderscheiben wie bisher erforderlich, sondern zusätzlich kann in einfacher und überraschender Weise das Streubild entsprechend den jeweiligen Windverhältnissen oder Düngersorten oder Arbeitsbreiten durch entsprechende Schaufelanstellung in Scheibenebene zur Radialen optimiert werden.

An Stelle des Austausches der Schleuderscheiben können auch die Wurfschaufeln ausgetauscht werden. Diese Wurfschaufeln sind dann ebenfalls stufenlos einstellbar, um so die Wurfschaufeln für jede Düngersorte in die optimale Stellung einstellen zu können.

Um eine narrensichere Einstellung und jedes Mißverständnis auszuschließen, ist vorgesehen, daß die jeder Wurfschaufel zugeordneten Markierungsskalen derart ausgebildet sind, daß jeder Wurfschaufel eine andere Markierungsskalen mit jeweils verschiedenen Bezeichnungen zugeordnet ist.

In einfacher Weise läßt sich dieses dadurch erreichen, daß die eine Skala für die eine Wurfschaufel Buchstabensymbole aufweist, während die andere Skala für die andere Wurfschaufel der gleichen Schleuderscheibe Zahlensymbole aufweist.

Mit dieser neuen Generation von Schleuderstreuern, die durch diese erfindungsgemäße Maßnahme geschaffen werden, ist es möglich, die Schleuderstreuer nicht nur auf Arbeitsbreiten von 9 bis 15m oder von 15 auf 24m einzustellen, sondern es ist erstmalig möglich geworden, die Schleuderstreuer auf Arbeitsbreiten von weniger als 12m und auf ein Mehrfaches von 12m einzustellen. Der Schleuderstreuer kann also in einfachster Weise auf Arbeitsbreiten von weniger als 12m und wesentlich mehr als 24m, bis zu 36m und mehr eingestellt werden. Es ist also hiermit in einfachster Weise möglich, auch das neue Verfähren "Stickstoffdünger auf 12m und bei weniger Stickstoff bzw. Grunddünger bzw. Spätdüngung die doppelte Arbeitsbreite - also 24m oder sogar die dreifache Arbeitsbreite - 32m" erreicht werden. Durch die Einstellung des Schleuderstreuers auf verschiedene Arbeitsbreiten nur noch durch unterschiedliche Schaufeleinstellung nach Skalen, die vorzugsweise unverwechselbar ausgebildet sind, ist die gesamte Einstellung des Schleuderstreuers wesentlich einfacher, sicherer und viel präziser geworden. In einigen Fällen kann es erforderlich sein, daß man zwei verschiedene Schleuderscheibenpaare für die Abdeckung der gesamten Arbeitsbreite von beispielsweise 9 bis 24m und mehr vorsieht, wobei das eine Schleuderscheibenpaar für die Arbeitsbreite von 9 bis 18m und das andere Schleuderscheibenpaar von 15 bis 24m und mehr (bis 36m) vorgesehen ist. Die Einstellung auf "Zwischenarbeitsbreiten" erfolgt ausschließlich über die Einstellung der Schaufeln mittels Skalen. Damit jede Wurfschaufel genau eingestellt werden kann, ist vorgesehen, daß für jede Wurfschaufel eigene Arretierungsund/oder Einstellmarkierungen vorgesehen sind. Diese Markierungen sind mit Symbolen (Zahlen, Buchstaben) gekennzeichnet, damit eine genaue Einstellung möglich ist.

Weitere Einzelheiten der Erfindung sind der Beispielbeschreibung sowie den Zeichnungen zu entnehmen. Hierbei zeigt

Fig. 1 einen erfindungsgemäß ausgebildeten Schleuderstreuer in Prinzipdarstellung und in der Ansicht von hinten,

Fig. 2 erfindungsgemäß ausgebildete Schleuderscheiben für kleinere Arbeitsbreiten und der Normaldüngung in der Ansicht von oben,

Fig. 3 die Schleuderscheiben gemäß Fig. 2 in der Ansicht von hinten,

Fig. 4 die Spätdüngungsschleuderscheiben mit Spätdüngungswurfschaufeln in der Ansicht von hinten,

Fig. 5 die Schleuderscheiben für größere Arbeitsbreiten mit entsprechenden Wurfschaufeln für die Normaldüngung,

Fig. 6 die Wurfschaufeln gemäß Fig. 5 in der Ansicht von hinten,

Fig. 7 Spätdüngungsscheiben mit Spätdüngungswurfschaufeln für größere Arbeitsbreiten in der Ansicht von hinten,

Fig. 8 eine erfindungsgemäß ausgebildete Schleuderscheibe für das Grenzstreuen in der Ansicht von oben,

Fig. 9 einen weiteren erfindungsgemäß ausgebildeten Schleuderstreuer in Prinzipdarstellung und in der Ansicht von hinten,

Fig. 10 die Schleuderscheibe mit Wurfschaufeln für die Normaldüngung und kleinerer Arbeitsbreiten in der Ansicht von oben,

Fig. 11 die Schleuderscheiben mit den Wurfschaufeln gemäß Fig. 10 in der Ansicht von hinten,

Fig. 12 die Schleuderscheiben mit Wurfschaufeln für kleinere Arbeitsbreiten und Spätdüngung in der ansicht von hinten,

Fig. 13 die Schleuderscheiben mit Normaldüngungswurfschaufeln für größere Arbeitsbreiten,

Fig. 14 die Schleuderscheibe mit Spätdüngungswurfschaufeln für größere Arbeitsbreiten und

Fig. 15 die Schleuderscheibe mit Wurfschaufeln für das Grenzstreuen.

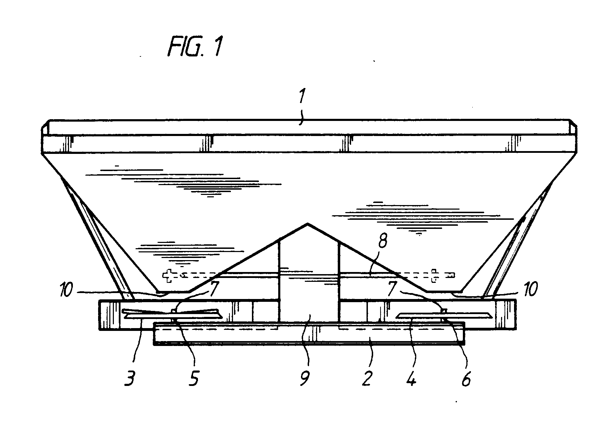

Der Schleuderdüngerstreuer gemäß Fig. 1 weist den Vorratsbehälter 1 sowie den Rahmen 2 auf. An dem Rahmen 2 sind die Getriebe für den Antrieb der Schleuderscheiben 3 und 4 angeordnet. Die Schleuderscheibenantriebswellen 5 und 6 enden in einem Abstand zu dem Vorratsbehälter 1, so daß die Schleuderscheiben 3 und 4, die leicht lösbar mittels einer Sicherung 7 auf deren Antriebswellen 5 und 6 befestigt sind, ohne Abnahme des Vorratsbehälters 1 abnehmbar kraftschlüssig mit den Antriebswellen 5 und 6 verbunden sind. Seitlich ragt in den Vorratsbehälter 1 die horizontal angeordnete Rührwelle 8 hinein, welche ebenfalls von einem Getriebe 9 angetrieben wird. Den Schleuderscheiben 3 und 4 wird das Material aus dem unteren Bereich des Vorratsbehälters 1 über Dosiereinrichtungen 10 in einstellbaren Mengen zugeführt.

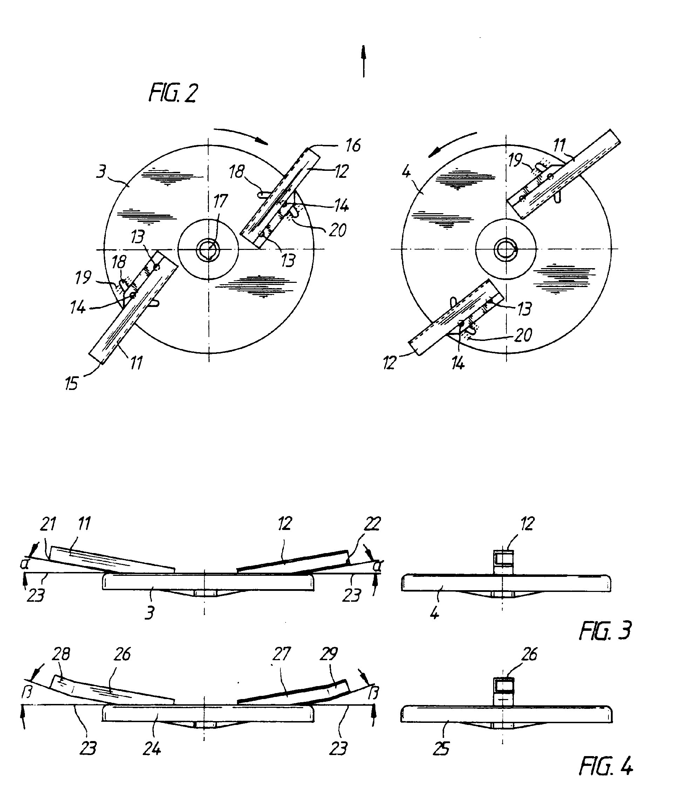

Für kleinere Arbeitsbreiten des Schleuderdüngerstreuers von beispielsweise 12 bis 18 m werden für die Normaldüngung die Schleuderscheiben 3 und 4 gemäß den Fig. 2 und 3 auf den Antriebswellen 5 und 6 des Schleuderdüngerstreuers gemäß Fig. 1 angeordnet. Auf den Schleuderscheiben 3 und 4 sind die Wurfschaufeln 11 und 12 mittels der Schraubbolzen 13 und 14 befestigt. Die Wurfschaufeln 11 und 12 weisen eine unterschiedliche Länge auf, d.h. die Abstreukanten 15 und 16 der Wurfschaufeln 11 und 12 weisen einen unterschiedlichen Abstand zur Drehachse 17 der Schleuderscheiben auf. Der Schraubbolzen 13, der an den Wurfschaufeln 11 und 12 im inneren Bereich der Wurfschaufel befestigt ist, faßt in ein in der Schleuderscheibe 3 bzw. 4 im inneren Bereich der Schleuderscheibe befindliches Loch. Auf der Unterseite der Schleuderscheibe 3 bzw. 4 ist auf dem Schraubbolzen 13 ein Sicherungselement, beispielsweise in Form einer selbstsichernden Mutter angebracht. Der Schraubbolzen 14, der an den Wurfschaufeln 11 und 12 angebracht ist, faßt jeweils in ein im äußeren Bereich der Schleuderscheibe 3 bzw. 4 angeordnetes Langloch 18. Auf der Unterseite der Schleuderscheibe 3 bzw. 4 ist auf dem Schraubbolzen 14 ein werkzeugloslösbares Befestigungselement, beispielsweise in Form einer Flügelmutter, angeordnet, mittels welcher die Wurfschaufeln 11 und 12 in der jeweils gewünschten Position festgeklemmt werden können. Im Bereich der Langlöcher 18 sind auf den Schleuderscheiben 3 bzw. 4 mit den Wurfschaufeln 11 und 12 zusammenwirkende Markierungselemente 19 und 20 angebracht. Diese Markierungselemente 19 und 20 sind unverwechselbar ausgebildet. Hierbei sind den Markierungselementen 19 beispielsweise Buchstaben zugeordnet, während den Markierungselementen 20 beispielsweise Zahlen zugeordnet sind. Somit ergibt sich automatisch eine eindeutige Zuordnung der in der Streutabelle angegebenen Werte zu den Wurfschaufeln 11 und 12, so daß in jedem Falle die Wurfschaufeln 11 und 12 anhand der angegebenen Werte immer in der richtigen Ebene mit dem richtigen Winkel zur Radialen eingestellt werden. Die Wurfschaufeln 11 und 12 sind somit stufenlos in Scheibenebene der Scheibe 3 bzw. 4 winkelverschwenkbar um den Schraubbolzen 13 angeordnet und mittels der dem Schraubbolzen 14 zugeordneten werkzeugloslösbaren Befestigungs- und Kemmverbindung feststellbar.

Die Endableitflächen 21 und 22 weisen den Winkel $\alpha$ zur Horizontalen 23 auf.

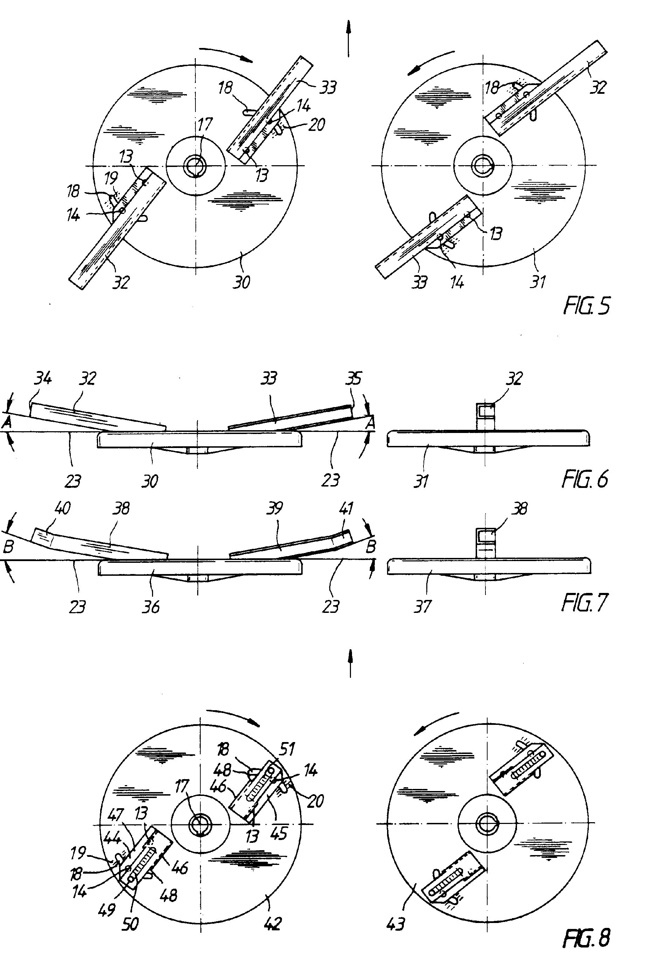

Zur Durchführung der Spätdüngung über bereits hoch aufgewachsene Pflanzen werden die Schleuderscheiben 3 und 4 gegen die Schleuderscheiben 24 und 25 gemäß Fig. 4 ausgetauscht. Hierzu wird das Sicherungselement 7 gelöst, so daß die Schleuderscheiben 3 und 4 von den Antriebswellen 5 und 6 abgenommen werden können. Nach der Abnahme dieser Schleuderscheiben 3 und 4 werden die Schleuderscheiben 24 und 25 auf die Antriebswellen 5 und 6 des Schleuderdüngerstreuers aufgesetzt und mittels des Sicherungselementes 7 gesichert. Die Schleuderscheiben 24 und 25 weisen die Wurfschaufeln 26 und 27 auf. Die Endableitflächen 28 und 29 der Wurfschaufeln 26 und 27 sind mit dem Winkel $\beta$ zur Horizontalen 23 angestellt. Der Winkel $\beta$ ist größer als der Winkel $\alpha$., so daß die Wurfschaufeln 26 und 27 der Schleuderscheiben 24 und 25 für die Spätdüngung mit einem größeren Winkel zur Horizontalen angestellt sind, als die Endableitflächen 21 und 22 der Wurfschaufeln 11 und 12 der Schleuderscheiben 3 und 4 für die Normaldüngung.

Die Wurfschaufeln 26 und 27 sind ebenfalls mit Schraubbolzen 13 und 14, wobei der Schraubbolzen 14 in das Langloch 18, welches ebenfalls in den Schleuderscheiben 24 und 25 angeordnet ist. Entsprechend den Wurfschaufeln 11 und 12 gemäß Fig. 2 für die Normaldüngung sind auch die Wurfschaufeln 26 und 27 der Schleuderscheiben 24 und 25 für die Spätdüngung winkelverschwenkbar und anhand von Skalen entsprechend den Markierungselementen 19 und 20 gemäß Fig. 2 in Scheibenebene winkelverschwenkbar in unterschiedlichen Positionen anstellbar.

Wenn mit dem Schleuderdüngerstreuer gemäß Fig. 1 Streubreiten mitArbeitsbreiten von größer als 18 m, beispielsweise 18 - 24 oder 28, 36 m bei der Normaldüngung durchgeführt werden sollen, werden die Schleuderscheiben 30 und 31 nach Abnahme der Schleuderscheiben 3 und 4 von den Wellen 5 und 6 auf den Antriebswellen 5 und 6 befestigt. Die Schleuderscheiben 30 und 31 weisen die Wurfschaufeln 32 und 33 auf, welche eine größere Wurfschaufellänge als die Wurfschaufeln 11 und 12 der Schleuderscheiben 3 und 4 besitzen. Die Arbeitsbreitendifferenz zwischen den beiden verschiedenen Arbeitsbreiten für den Wechsel von einer Wurfschaufellänge gemäß der Wurfschaufeln 11 und 12 der Schleuderscheiben 3 und 4 auf die andere Wurfschaufellänge gemäß der Wurfschaufeln 32 und 33 der Schleuderscheiben 30 und 31 beträgt zumindest 6 m.

Die Wurfschaufeln 32 und 33 sind mittels der Schraubbolzen 13 und 14 auf den Schleuderscheiben 30 und 31 befestigt. Hierbei faßt der Schraubbolzen 14 jeweils in das im äußeren Bereich der Schleuderscheiben 30 und 31 angeordnete Langloch 18. Im Bereich des jeweiligen Langlöches 18 sind die Markierungselemente 19 und 20 entsprechend Fig. 2 angeordnet. Anhand dieser Skalen 19 und 20 lassen sich die Wurfschaufeln 32 und 33 exakt nach den in der Streutabelle angegebenen Werten einstellen, so daß unterschiedliche Winkeleinstellungen der Wurfschaufeln 32 und 33 zur Radialen stufenlos eingestellt werden können. Durch die unterschiedliche Winkelanstellung der Wurfschaufeln 32 und 33 zur Radialen wird bei jeder Düngersorte und bei jeder Arbeitsbreite im vorgesehenen Arbeitsbereich dieser Schleuderscheiben 30 und 31 ein genau exakt gleichmäßiges Streuergebnis für jede Düngersorte erzielt.

Die Endableitflächen 34 und 35 weisen den Winkel A zur Horizontalen 23 auf.

Zur Durchführung der Spätdüngung mit dem Schleuderdüngerstreuer gemäß Fig. 1 über bereits hoch aufgewachsene Pflanzen werden die Schleuderscheiben 30 und 31 für die größeren Arbeitsbreiten gegen die Schleuderscheiben 36 und 37 ausgetauscht. Diese Schleuderscheiben 36 und 37 sind ebenfalls für größere Arbeitsbreiten entsprechend der Arbeitsbreite der Schleuderscheiben 30 und 31 vorgesehen und mit den Wurfschaufeln 38 und 39 ausgestattet, deren Endableitflächen 40 und 41 den Winkel B zur Horizontalen aufweisen. Der Winkel B der Endableitflächen 40 und 41 zur Horizontalen 23 für die Spätdüngung ist größer als der Winkel A für die Endableitflächen 34 und 35 der Schleuderscheiben 30 und 31 für die Normaldüngung.

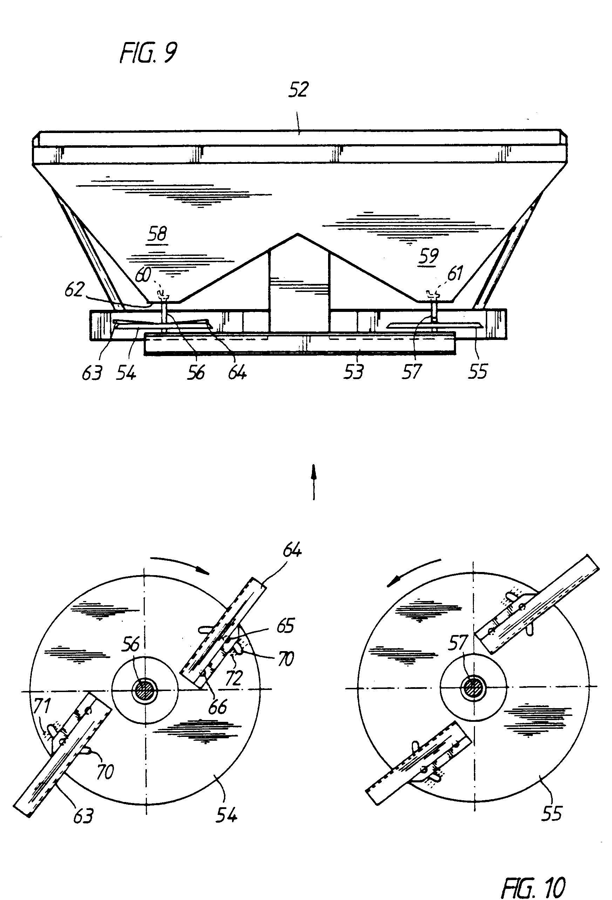

Die Fig. 8 zeigt die Schleuderscheiben 42 und 43, mit den kurzen Wurfschaufeln 44 und 45, mit denen das sog. "Grenzstreuen" durchgeführt werden kann. Diese Wurfschaufeln 44 und 45 sind ebenfalls winkelverschwenkbar auf den Grenzstreuschleuderscheiben 42 und 43 angeordnet, wobei die Grenzstreuwurfschaufeln 44 und 45 zu dem noch teleskopartig längerveränderbar sind. Die Wurfschaufeln 44 und 45 sind mittels der Schraubbolzen 13 und 14 auf den Schleuderscheiben 42 und 43 befestigt. Hierbei wirkt der Schraubbolzen 14 mit dem jeweiligen Langloch 18, welches jeweils im äußeren Bereich der Schleuderscheiben 42 und 43 angeordnet ist, zusammen. Auch diese Schleuderscheiben 42 und 43 sind im Bereich des jeweiligen Langloches 18 mit Markierungselementen 19 und 20 ausgerüstet, so daß sich unterschiedliche Winkeleinstellungen der Wurfschaufeln 44 und 45 zur Radialen stufenlos einstellen lassen. Zur Durchführung des "Grenzstreuens", je nach dem auf welcher Seite des Schleuderdüngerstreuers die Feldrandgrenze liegt, ist eine der in Fig. 8 dargestellten Grenzstreuscheiben 42 oder 43 einzusetzen. Wenn die Feldrandgrenze auf der linken Seite des Schleuderdüngerstreuers liegt, ist die linke Schleuderscheibe 42 beispielsweise die vorab genannten Schleuderscheiben 3 bzw. 30 auszutauschen. Liegt die Feldrandgrenze auf der rechten Seite des Schleuderdüngerstreuers, so ist die jeweils rechte Schleuderscheibe 4 bzw. 31 gegen die Schleuderscheibe 43 für das "Grenzstreuen" auszutauschen. Der Einsatz dieser Grenzstreuschleuderscheiben 42 bzw. 43 wird erforderlich, um die Arbeitsbreite am Feldrand wesentlich zu verringern, wenn der Dünger beispielsweise auf einer Ackerfläche mit in bestimmten Abständen angelegten Fahrgassen ausgestreut werden soll. Hierbei wird durch den Einsatz der jeweiligen Grenzstreuschleuderscheibe 42 bzw. 43 ein am Feldrand steil abfallendes Streubild erzeugt, so daß die Düngemittel nicht über den Feldrand hinaus abgeschleudert werden. Dadurch, daß die Grenzstreuschleuderscheiben 42 und 43 mit teleskopartig längenveränderbaren Wurfchaufeln 44 und 45 ausgerüstet sind, läßt sich das äußere Teil 46 einer jeden Wurfschaufeln 44 bzw. 45 in bezug auf das innere Teil 47 nach außen verschieben, so daß die Abstreukante 48 des jeweiligen äußeren Teiles 46 der Wurfschaufeln 44 bzw. 45 einen anderen Abstand zur Drehachse 17 aufweist. Diese längenveränderbaren Wurfschaufeln 44 und 45 lassen sich in verschiedenen Positionen mittels der Schraubverbindungen 49 festklemmen, wobei die Einstelldaten für das jeweilige äußere Teil 46 ebenfalls der Streutabelle entnommen werden, wobei dann die Einstellung mittels der Markierungselemente 50 und 51 erfolgt. Der jeweilige Abstand der Abstreukante 48 der Grenzstreuwurfschaufeln 44 und 45 zur Drehachse 17 bestimmt jeweils den Grenzstreuabstand zum Feldrand, d.h., bei geringen Grenzstreuabständen weist die Abstreukante 48 der Wurfschaufeln 44 bzw. 45 einen geringeren Abstand zur Drehachse 17 der jeweiligen Schleuderscheibe 42 bzw. 43 auf, als bei größeren Grenzstreuabständen.

Der Schleuderdüngerstreuer gemäß Fig. 9 weist den Vorratsbehälter 52 sowie den Rahmen 53 auf. An dem Rahmen 53 sind die Getriebe für den Antrieb der Schleuderscheiben 54 und 55 angeordnet. Diese Schleuderscheiben 54 und 55 sind auf den Schleuderscheibenantriebswellen 56 und 57 angeordnet, wobei diese Schleuderscheibenantriebswellen 56 und 57 jeweils von unten in die trichterförmigen Behälterteile 58 und 59 des Vorratsbehälters 52 hineinragen. Auf diesen Schleuderscheibenantriebswellen 56 und 57 ist jeweils im Inneren des Vorratsbehälters 52 das Rührorgan 60 und 61 befestigt. Den Schleuderscheiben 54 und 55 werden die sich im Vorratsbehälter 52 befindlichen Düngemittel über die im unteren Bereich der jeweiligen trichterförmigen Behälterteile 58 und 59 angeordneten Dosiereinrichtungen 62 in genau einstellbaren Mengen zugeführt. Die dem Vorratsbehälter herausrieselnden Düngemittelpartikel werden von den auf den Schleuderscheiben 54 und 55 angeordneten Wurfschaufeln 63 und 64 erfaßt und gleichmäßig über die zu bestreuende Ackerfläche verteilt.

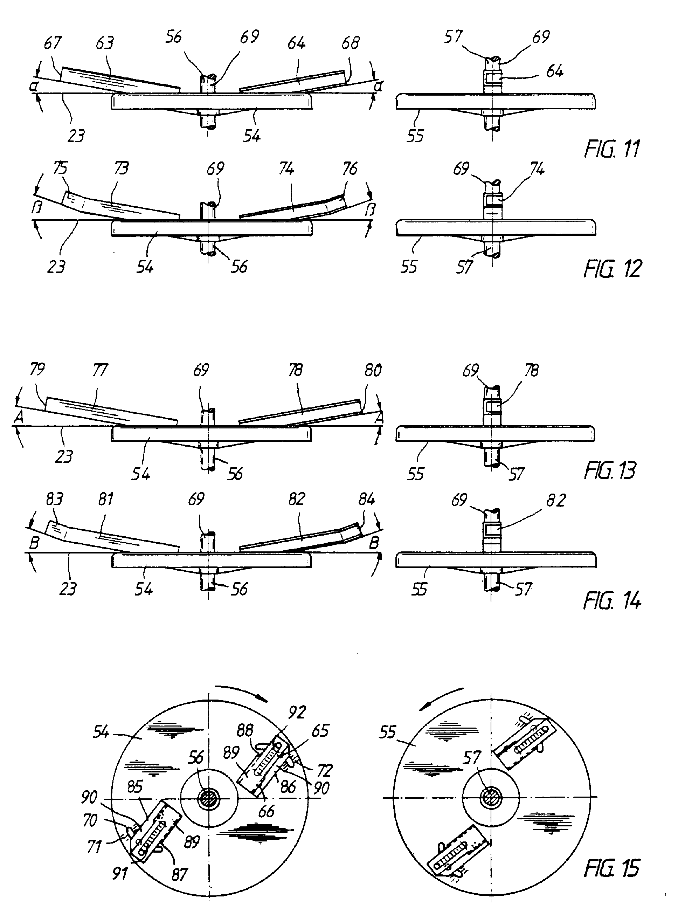

Für kleinere Arbeitsbreiten des Schleuderdüngerstreuers von beispielsweise 12 bis 18 m werden für die Normaldüngung die Wurfschaufeln 63 und 64 gemäß den Fig. 10 und 11 auf den Schleuderscheiben 54 und 55 befestigt. Die Befestigung der Wurfschaufeln 63 und 64 auf den Schleuderscheiben 54 und 55 erfolgt mittels der Schraubbolzen 65 und 66. Die Wurfschaufeln 63 und 64 weisen eine unterschiedliche Länge auf, d.h. die Abstreukanten 67 und 68 der Wurfschaufeln 63 und 64 weisen einen unterschiedlichen Abstand zur Drehachse 69 der Schleuderscheiben 54 und 55 auf. Durch die unterschiedlich lange Ausbildung der Wurfschaufeln 63 und 64 wird gewährleistet, daß die von diesen Wurfschaufeln abgeschleuderten Düngemittelpartikel gleichmäßig über die zu bestreuende Arbeitsbreite verteilt werden. Der Schraubbolzen 66, der im inneren Bereich der jeweiligen Wurfschaufel 63 und 64 angeordnet ist, wirkt mit einer sich in der jeweiligen Schleuderscheibe 54 und 55 befindlichen Bohrung zusammen. Auf der Unterseite der Schleuderscheiben 54 bzw. 55 ist dieser Schraubbolzen 66 mit einem Sicherungselement, welches beispielsweise als selbstsichernde Mutter ausgebildet ist, versehen. Der jeweilige Schraubbolzen 65 wirkt mit dem sich jeweils im äußeren Bereich der Schleuderscheiben 54 bzw. 55 befindlichem Langloch 70 zusammen. An der Unterseite der Schleuderscheibe 54 bzw. 55 ist auf diesem Schraubbolzen 65 ein werkzeuglos lösbares Befestigungselement, beispielsweise in Form einer Flügelmutter, angebracht, mittels welcher die Wurfschaufeln 63 und 64 in der jeweils gewünschten Position festgeklemmt werden können. Die jeweils gewüschte Position der Wurfschaufeln 63 und 64 läßt sich mittels der Markierungelemente 71 und 72, mit denen die Wurfschaufeln 63 und 64 zusammenwirken, anhand von Einstelldaten, die einer Streutabelle entnommen werden, einstellen. Hierbei sind die Markierungselemente 71 und 72 unterschiedliche ausgebildet, so daß eine unverwechselbare Einstellung der jeweiligen Positionen der winkelverschwenkbaren Wurfschaufeln 63 und 64 gewährleistet ist. Die Markierungselemente 71 können hierbei beispielsweise als Buchstaben und die Markierungselemente 72 als Zahlen ausgebildet sein. Die auf den Schleuderscheiben 54 und 55 angeordneten Wurfschaufeln 63 und 64 sind somit stufenlos in Scheibenebene der Schleuderscheiben 54 und 55 winkelverschwenkbar um den Schraubbolzen 66 angeordnet und mittels der dem Schraubbolzen 65 zugeordneten werkzeuglos lösbaren Befestigungs- und Kemmverbindung feststellbar.

5

Die Endableitflächen 67 und 68 weisen den Winkel $\alpha$ zur Horizontalen 23 auf.

Zur Durchführung der Spätdüngung über bereits hoch aufgewachsene Pflanzen werden die Wurfschaufeln 63 und 64 der Schleuderscheiben 54 und 55 gegen die Wurfschaufeln 73 und 74 ausgetauscht, indem die Schraubverbindungen 65 und 66 gelöst werden und die Wurfschaufeln 53 und 54 sich somit von den Schleuderscheiben 54 und 55 abnehmen lassen. Nachdem die Wurfschaufeln 63 und 64 von den Schleuderscheiben 54 und 55 demontiert sind, lassen sich die Wurfschaufeln 73 und 74 auf diese Schleuderscheiben 54 und 55 montieren. Nun weisen die Endableitflächen 75 und 76 der Wurfschaufeln 73 und 74 den Winkel $\beta$ zur Horizontalen 23 auf. Der Winkel $\beta$ ist größer als der Winkel $\alpha$, so daß die auf den Schleuderscheiben 54 und 55 angeordneten Wurfschaufeln 73 und 74 für die Spätdüngung mit einem größeren Winkel zur Horizontalen 23 angestellt sind, als die Endableitflächen 67 und 68 der sich zur Normaldüngung auf den Schleuderscheiben 54 und 55 befindlichen Wurfschaufeln 63 und 64. Die Wurfschaufeln 73 und 74 für die Spätdüngung sind ebenfalls winkelverschwenkbar auf den Schleuderscheiben 54 und 55 entsprechend den Wurfschaufeln 63 und 64 für die Normaldüngung angeordnet und wirken mit den Markierungselementen 71 und 72 des jeweiligen Langloches 70 zusammen, so daß sich der jeweilige Anstellwinkel der Wurfschaufeln 73 und 74 für die Spätdüngung ebenfalls anhand von Streutabellen für den jeweiligen vorliegenden Einsatzfall einstellen läßt. Hierdurch ist es auch möglich, auch bei der Spätdüngung durch eine entsprechende Einstellung der Wurfschaufeln 73 und 74 ein optimales Streubild bei einem Ausstreuen der Düngemittelpartikel zu erhalten.

Sollen nun die Düngemittelpartikel mit dem Düngerstreuer gemäß Fig. 9 über größere Arbeitsbreiten von 18 m, beispielsweise 18 bis 24 oder 28, 36 m bei der Normaldüngung durchgeführt werden, sind die Wurfschaufeln 77 und 78 auf den Schleuderscheiben 54 und 55 zu befestigen. Die Entableitflächen 79 und 80 der Wurfschaufeln 77 und 78 weisenden Winkel A zur Horizontalen 23 auf. Diese Wurfschaufeln 77 und 78 sind im Vergleich zu den Wurfschaufeln 63 und 64 länger ausgebildet, so daß sie die Düngemittelpartikel über einen größeren Streubereich abschleudern. Hierbei sind die Wurfschaufeln 67 und 68 selbstverständlich auch unterschiedlich lang ausgebildet, um ein gleichmäßiges Streubild über die gesamte Arbeitsbreite zu erhalten. Soll nun für die großen Arbeitsbreiten von größer als 18 m, beispielsweise 18 bis 24 m oder 28, 36 m die Spätdüngung durchgeführt werden, so sind die Wurfschaufeln 71 und 72 auf den Schleuderscheiben 64 und 65 in bereits erwähnter Weise zu befestigen. Hierbei weisen die Endableitflächen 83 und 84 der Wurfschaufeln 81 und 82 den Winkel B zur Horizontalen 23 auf. Der Winkel B ist größer als der Winkel A, so daß die Wurfschaufeln 81 und 82 für die Spätdüngung mit einem größeren Winkel zur Horizontalen angestellt sind, als die Endableitflächen 79 und 80 der Wurfschaufeln 77 und 78 für die Normaldüngung.

Sollen nun Randzonen am Feldrand bestreut werden, beispielsweise bei einem vorgegebenen Fahrgassensystem, so ist es erforderlich, daß zum Feldrand mit einseitig reduzierter Arbeitsbreite mit am Feldrand steil abfallendem Streubild gestreut wird. Hierbei wird beispielsweise die Schleuderscheibe 54 oder 55, je nach dem auf welcher Seite des Schleuderdüngerstreuers gemäß Fig. 9 sich die zu bestreuende Feldrandzone befindet, mit den Grenzstreuwurfschaufeln 75 und 76 versehen, deren Abstreukanten 87 und 88 einen geringeren Abstand zur Drehachse 69 der Schleuderscheibe 54 aufweisen als die vorab genannten Wurfschaufeln. Um sich nun unterschiedlichen Fahrgassensystemen anpassen zu können, d.h. auf unterschiedlich breiten Feldrandzonen Düngemittel auszustreuen, ohne daß die Düngemittelpartikel über den Feldrand hinaus geschleudert werden, sind die Grenzstreuwurfschaufeln 85 und 86 teleskopartig längenveränderbar ausgebildet, wobei sich der jeweilige Anstellwinkel auf der Schleuderscheibe 54 der Wurfschaufeln 85 und 86 wie bei den vorab genannten Wurfschaufeln im Bereich des Langloches 70 verändern läßt. Je nach dem, wie breit die zu bestreuende Feldrandzone ist, läßt sich der Abstand der jeweiligen Abstreukante 87 und 88 der Grenzstreuschaufeln 85 und 86 von der Drehachse 69 der Schleuderscheiben 54 und 55 individuell einstellen, wobei die Einstelldaten ebenfalls einer Streutabelle entnommen werden. Anhand dieser Daten wird das äußere Teil 89 der Wurfschaufeln 85 und 86 in bezug auf das innere Teil 90 verschoben, wobei das jeweils äußere Teil 89 der Wurfschaufeln 85 und 86 mit den Markierungselementen 91 und 92 zusammenwirkt. Die Markierungselemente 91 der Wurfschaufeln 85 sind hierbei anders ausgebildet als die Markierungselemente 92 der Wurfschaufeln 86, wodurch eine unverwechselbare Einstellung der jeweiligen Länge der Wurfschaufeln 85 und 86 gewährleistet ist.

## Patentansprüche

1. Verfahren zum Einsatz von Schleuderdüngerstreuern mit Vorratsbehälter (1,52) und zumindest zwei rotierend angetriebenen Schleuderscheiben (3,4,24,25,30,31,36,37,42,43), auf denen jeweils zumindest zwei Wurfschaufeln (11,12,26,27,32,38,39,44,45, 53,54,73,74,77,78,81,82,85,86), vorzugsweise unterschiedlicher wirksamer, Längen angeordnet sind, wobei für die Normaldüngung austauschbare Wurfschaufeln mit kleineren Winkeln zur Horizontalen angestellte Endableitfläche und zur Spätdüngung austauschbare Wurfschaufeln mit größeren Winkeln zur Horizontalen angestellte Endableitflächen vorgesehen sind, wobei für verschiedene Arbeitsbreiten jeweils verschieden lange Wurfschaufeln (11,12,26,27,32,38,39,44,45, 53,54,73,74,77,78,81, 82,85,86) eingesetzt werden, indem die Wurfschaufeln unterschiedlicher Länge, kürzer oder länger, gegeneinander ausgetauscht werden, wobei die Arbeitsbreitendifferenz zwischen zwei verschiedenen Arbeitsbreitenbereichen für den Wechsel von einer Wurfschaufellänge auf die andere Wurfschaufellänge zumindest 6 m beträgt, wobei jede Schleuderscheibe (3,4,24,25,30,31,36,37,42,43,54,55) im Bereich jeder Wurfschaufel (11,12,26,27,32,38,39,44,45, 53,54,73,74,77,78,81,82,85,86) zumindest ein Langloch (18) aufweist, in welches jeweils an den Wurfschaufeln (11,12,26,27,32,38,39,44,45, 53,54,73,74,77,78,81,82,85,86) angeordnete Schraubbolzen (14) eingreifen, wobei im Bereich jeder Wurfschaufel (11,12,26,27,32,38,39,44,45, 53,54,73,74,77,78,81,82,85,86) Markierungskalen (19,20) zur Winkeleinstellung der Wurfschaufeln (11,12,32, 33,38,39,45,45,53,54,73,74,77,78,81,82,85,86) angeordnet sind, wobei die Schleuderscheiben (3,4,24,25,30, 31,36,37,42,43,54,55) mit den in Scheibenebene stufenlos winkelverschwenkbaren Wurfschaufeln (11,12, 32,33) zur Normaldüngung gegen Schleuderscheiben (24,25,36,37) mit in Scheibenebene stufenlos winkelverschwenkbaren Wurfschaufeln (26,27,38,39) zur Spätdüngung auswechselbar auf den Antriebswellen (5,6) angeordnet sind oder die in Scheibenebene stufenlos winkelverschwenkbaren Wurfschaufeln (63,64,77,78) zur Normaldüngung gegen in Scheibenebene stufenlos winkelverschwenkbaren Wurfschaufeln (73,74,81,82) zur Spätdüngung auswechselbar auf den Schleuderscheiben (54,55) angeordnet sind.

2. Verfahren nach Anspruch 1, dadurch gekennzeichnet, daß zusätzlich zu den mit den in Scheibenebene stufenlos winkelverschwenkbaren Wurfschaufeln (11,12,26, 27,32,33,38,39) zur Normal- oder Spätdüngung mit relativ langen Wurfschaufeln relativ kurz ausgebildete Wurfschaufeln (54,55) zum sog. "Grenzstreuen" in austauschbarer Weise eingesetzt werden.

3. Verfahren nach Anspruch 1, dadurch gekennzeichnet, daß zum "Grenzstreuen" winkelverschwenkbare Wurfschaufeln (54,55) eingesetzt werden, die teleskopartig längenveränderbar sind.

## Claims

1. Method of using centrifugal fertilizer broadcasters, including hopper (1, 52) and at least two rotatably driven centrifugal discs (3, 4, 24, 25, 30, 31, 36, 37, 42, 43), on each of which there are disposed at least two throwing vanes (11, 12, 26, 27, 32, 38, 39, 44, 45, 53, 54, 73, 74, 77, 78, 81, 82, 85, 86), preferably of different effective lengths, throwing vanes which are interchangeable for the normal fertilizing operation being provided with an end deflector face orientated at smaller angles relative to the horizontal, and throwing vanes which are interchangeable for the late fertilizing operation being provided with end deflector faces which are orientated at greater angles relative to the horizontal, throwing vanes (11, 12, 26, 27, 32, 38, 39, 44, 45, 53, 54, 73, 74, 77, 78, 81, 82, 85, 86) of different lengths being used for different working widths, while the throwing vanes of variable length, shorter or longer, are interchanged with one another, the difference in the working width between two different working width ranges for changing one throwing vane length to the other throwing vane length being at least 6 m, each centrifugal disc (3, 4, 24, 25, 30, 31, 36, 37, 42, 43, 54, 55) having at least one slot (18) in the region of each throwing vane (11, 12, 26, 27, 32, 38, 39, 44, 45, 53, 54, 73, 74, 77, 78, 81, 82, 85, 86), screw bolts (14) which are disposed on the respective throwing vanes (11, 12, 26, 27, 32, 38, 39, 44, 45, 53, 54, 73, 74, 77, 78, 81, 82, 85, 86) engaging in said slot, marker scales (19, 20) being disposed in the region of each throwing vane (11, 12, 32, 38, 39, 44, 45, 53, 54, 73, 74, 77, 78, 81, 82, 85, 86) for setting the angles of the throwing vanes (11, 12, 26, 27, 32, 38, 39, 44, 45, 53, 54, 73, 74, 77, 78, 81, 82, 85, 86), the centrifugal discs (3, 4, 24, 25, 30, 31, 36, 37, 42, 43, 54, 55) which are provided with the throwing vanes (11, 12, 32, 33) which are stepwisely angularly pivotable in the plane of the discs for the normal fertilizing operation being disposed on the drive shafts (5, 6) so as to be interchangeable with centrifugal discs (24, 25, 36, 37) which are provided with throwing vanes (26, 27, 38, 39) which are stepwisely angularly pivotable in the plane of the discs for the late fertilizing operation, or the throwing vanes (63, 64, 77, 78) which are stepwisely angularly pivotable in the plane of the discs for the normal fertilizing operation are disposed on the centrifugal discs (54, 55) so as to be interchangeable with throwing vanes (73, 74, 81, 82), which are stepwisely angularly pivotable in the plane of the discs, for the late fertilizing operation.

2. Method according to claim 1, characterised in that, in addition to the throwing vanes (11, 12, 26, 27, 32, 38, 39), which are stepwisely angularly pivotable in the plane of the discs for the normal or late fertilizing operation and have relatively long throwing vanes, relatively short throwing vanes (54, 55) are used for the so-called "boundary broadcasting operation" in an interchangeable manner.

3. Method according to claim 1, characterised in that, for the "boundary broadcasting operation", angularly pivotable throwing vanes (54, 55) are used, which are longitudinally variable in a telescopic manner.

**Revendications**

1. Procédé de mise en oeuvre d'un épandeur centrifuge comportant un réservoir d'alimentation (1, 52) et au moins deux disques d'épandage entraînés en rotation (3, 4, 24, 25, 30, 31, 36, 37, 42, 43), comportant au moins deux palettes d'éjection (11, 12, 26, 27, 32, 38, 39, 44, 45, 53, 54, 73, 74, 77, 78, 81, 85, 86), ayant de préférence des longueurs utiles différentes, les palettes d'éjection remplaçables pour l'épandage normal ayant des surfaces de guidage d'extrémité faisant un angle plus faible par rapport à la direction horizontale et les palettes d'éjection remplaçables, servant à l'épandage de couverture ayant des surfaces de guidage d'extrémité faisant un angle plus important par rapport à la direction horizontale, et pour les différentes largeurs, on a des palettes d'éjection (11, 12, 26, 27, 32, 38, 44, 45, 53, 54, 73, 74, 77, 78, 81, 82, 85, 86) de longueurs différentes, les palettes d'éjection de longueurs différentes ( plus courtes ou plus longues) pouvant être échangées et la différence des largeurs de travail entre deux plages de largeurs différentes pour le remplacement d'une longueur de palette d'éjection par une autre longueur palette d'éjection est moins égale à 6 m et chaque disque d'épandage (3, 4, 24, 25, 30, 31 36, 37, 42, 43, 54, 55) ayant au niveau de chaque palette d'éjection (11, 12, 26, 27, 32, 38, 39, 55, 45, 53, 54, 73, 74, 77, 79, 81, 82 85 86) au moins un trou oblong (18) qui coopère avec un boulon (14) associé à chaque palette d'éjection (11, 12, 26 27, 32, 38, 39, 44, 45, 53, 54, 73, 74, 77, 78, 81, 82, 85, 86), et au niveau de chaque palette d'éjection (11, 12, 26, 27, 32, 38, 39, 44, 45, 53, 54, 73, 74, 77, 78, 81, 82, 85, 86) il y a des éléments de repérage (échelle) (19, 20) pour le réglage angulaire des palettes d'éjection (11, 12, 26, 27, 32, 38, 39, 44, 45, 53, 54, 73, 74, 77, 78, 81, 82, 85, 86), pour régler l'angle des palettes d'éjection (11, 12, 26, 27, 32, 38, 39, 44, 45, 53, 54, 73, 74, 77, 78, 81, 82, 85, 86), les disques d'épandage (3, 4, 24, 25, 30, 31, 36, 37, 42, 43) à palettes d'éjection (11, 12, 32, 33) servant à l'épandage normal et qui se règlent angulairement en continu dans le plan du disque pouvant être remplacés par des disque d'épandage (24, 25, 36, 37) avec des palettes d'éjection (26, 27, 38, 39) pour l'épandage de couverture, palettes qui sont réglables angulairement en continu dans le plan du disque, ces disques étant montés sur les axes d'entraînement (5, 6) ou encore les palettes d'éjection (63, 64, 77, 78) de l'épandage normal, réglables angulairement en continu dans le plan du disque pouvant être remplacées par des palettes d'éjection (73, 74, 81, 82) pour l'épandage de couverture, réglables angulairement en continu dans le plan du disque, sur les disques d'épandage (54, 55).

2. Procédé selon la revendication 1, caractérisé en ce qu'en plus des palettes d'éjection (11, 12, 26, 27, 32, 33, 38, 39) réglables angulairement, en continu dans le plan du disque pour l'épandage normal ou l'épandage de couverture, avec des palettes d'éjection (54, 55) relativement courtes, pour l'épandage en limite, sont utilisables de manière interchangeable.

3. Procédé selon la revendication 1, caractérisé en ce que pour l'épandage en limite, on utilise des palettes d'éjection (54, 55) pivotant angulairement et qui sont de longueur télescopique non réglables.

FIG. 1

FIG. 2

FIG. 3

FIG. 4

10

FIG. 5

FIG. 6

FIG. 7

FIG. 8

11

FIG. 9

52

58

59

60

61

62

63  54  56  64  53  57  55

64

65

70

56

72

66

71

70

57

63  54  55

FIG. 10

FIG. 11

FIG. 12

FIG. 13

FIG. 14

FIG. 15